# EUROPEAN PATENT APPLICATION

(11) **EP 0 655 637 A1**
(43) Date of publication of application: **31.05.1995**
(21) Application number: 94203359.8
(22) Date of filing: 17.11.1994
(51) Int. Cl.: G02B 26/10, F16C 39/06

(54) **Light beam deflector including a magnetically-unweighted rotor assembly**

(30) Priority: 30.11.1993 US 160121
(71) Applicant: EASTMAN KODAK COMPANY, Rochester, New York 14650 (US)
(72) Inventor: Stephany, Thomas Michael, c/o Eastman Kodak Co., Rochester, New York 14650-2201 (US); Lee, Kelly J., c/o Eastman Kodak Company, Rochester, New York 14650-2201 (US)
(74) Representative: Blickle, K. Werner, Dipl.-Ing.

(57) **Abstract**

A self-acting gas bearing, which may include a grooveless design, that effects smooth and precise rotation of a load over an extended series of start/stop cycles, includes a beam scanner using a self-acting gas bearing to support a beam deflector preferably in the form of a holographically-generated planar diffraction grating disk (i.e., a hologon). The contemplated gas bearing is designed to operate either vertically or tilted at an angle by use of a bottom grooved thrust plate to provide vertical lift. The weight of the rotor assembly, which includes the hologon and other components, is reduced (i.e., unweighted) by use of opposing magnets. The frictional degradation of the lower thrust plate at start-up and touch-down is therefore reduced. The amount of opposing magnetic force is easily controlled by selecting the spacing between the magnets.

## Description

### BACKGROUND OF THE INVENTION

### Technical Field

This invention relates generally to light beam deflectors in beam scanning apparatus, and particularly to a light beam deflector having a self-pumped gas bearing.

### Background Art

Laser sources combined with rotating beam deflection mechanisms are known for use in reading image information (also known as input scanning), exposing or printing image information (also known as output scanning), and displaying image information. For example, holographic beam deflectors rotate a holographic disk in the path of a stationary beam of light, such as from a laser source, and the rotation causes the beam to scan. The scanning beam produced by such an apparatus is made wobble-insensitive if the incident and diffracted angles of the monochromatic beam illuminating the holographic disk are kept essentially equal.

Self-acting hydrodynamic bearings are preferred in high-speed rotating polygon and hologon laser beam deflection systems. Such a bearing supports the load (e.g., a holographic disk) by the pressure generated by a fluid flow in the bearing gap. The fluid flow is determined by the relative motion of the bearing surfaces and viscosity of the fluid. These bearings may be categorized according to the composition of the hydrodynamic fluid (gas, oil, grease, etc.).

Self-acting gas bearings have the advantage that the threat of contamination of the hologon by oil or grease is avoided. However, the self-acting gas bearing requires relative movement of the bearing surfaces to generate a fluid pressure in the bearing gap. The bearing surfaces are in contact when the load is at rest and at start-up and shut-down.

At speed, a self-acting gas bearing operates on a thin gas film that develops between the bearing surfaces. The thinness and low damping of a gas film make it necessary but extremely difficult to analyze the dynamic characteristics of the bearing for compliance, stability, and load carrying capacity at all of the possible excitation frequencies of the system. Self-acting gas bearings are also subject to complex instability phenomena which, if unchecked, lead to bearing failure. External vibrations at specific frequencies, or poor balance, can stimulate these instabilities.

One major factor contributing to instability is typically referred to as the "mass/stiffness resonance." The stiffness of a self-acting gas bearing will change with speed and will not necessarily be linear with deflection. A self-acting gas bearing must therefore be designed such that its resonance frequency lies outside the frequency range of any likely external vibration. Similarly, the speed range of the bearing must be below this resonance speed.

If this is not possible, sufficient damping must be built in, to thereby limit the vibration amplitude. However, it is difficult to adequately dampen a bearing rotor assembly by means of shock mounting, because the load (e.g., a hologon) must rotate about its spin axis without the positional deviations associated with the flexure of a shock mount damping apparatus. The stiffness achieved by a self-acting gas bearing is therefore critical to its performance and reliability. Among the conventional remedies to the above problems therefore is to maintain close control of manufacturing tolerances, surface finishes, thermal and elastic distortions, alignment, and balancing.

Another type of a bearing for use in a beam scanner is a magnetic thrust bearing, such as that disclosed in U.S. Patent 4,726,640, wherein pairs of repulsive and/or attractive magnets are said to displace the rotor assembly from the bearing sleeve. Attractive-magnetic bearings and repulsive-magnetic bearings thereby offer some isolation from external vibration, but they are typically less desirable for use as a thrust bearing in a beam scanner because the magnetic bearing will lack the necessary stiffness.

All of the foregoing problems increase the cost and complexity of a self-acting gas bearing. In general, no conventional approach has resulted in an inexpensive gas bearing design that can withstand a series of start/stop cycles of more than about 20,000 cycles. Accordingly, there remains a distinct need for an inexpensive, self-acting aerodymamic bearing for use in optical applications that can withstand a series of start/stop cycles well in excess of 20,000 cycles.

### SUMMARY OF THE INVENTION

The improved self-acting gas bearing of the present invention was developed in response to a need for an inexpensive cylindrical gas bearing operable at very high speed and in a vertical or non-vertical spin axis. A grooveless (plain) gas bearing was sought because such a design may be manufactured more easily and inexpensively, but a grooved gas bearing is also contemplated. The bearing was needed to support a rotatable hologon disk in an exacting (precisely-aligned) beam scanning optical system, and therefore the bearing was required to provide smooth, precise rotation of a relatively large load (a hologon disk) over an extended series of start/stop cycles, and at a precise location in the optical structure.

The bearing should be optionally capable of supporting the high speed rotation of a holographic disk in a spin axis aligned at an angle with respect to a horizontal plane. Operation of the bearing at an angle affords a significant advantage for a hologon-based beam-scanning system: the tilt of the bearing/disk assembly allows for construction of an optical system that is much more compact, and uses fewer optical elements, than found in conventional spinning polygon beam scanning systems.

Accordingly, the present invention provides an improved self-acting gas bearing, which may include a grooveless design, that effects smooth and precise rotation of a load over an extended series of start/stop cycles. The present invention contemplates a beam scanner using a self-acting gas bearing to support a beam deflector preferably in the form of a holographically-generated planar diffraction grating disk (i.e., a hologon). The contemplated gas bearing is designed to operate either vertically or tilted at an angle by use of a bottom grooved thrust plate to provide vertical lift. The weight of the rotor assembly, which includes the hologon and other components, is reduced (i.e., unweighted) by use of opposing magnets. The frictional degradation of the lower thrust plate at start-up and touch-down is therefore reduced. The amount of opposing magnetic force is easily controlled by selecting the spacing between the magnets.

The contemplated gas bearing has been found useful in a high precision output writer application where the requirement for high speed motor operation (above 12,000 rpm) and extremely low flutter make prior art bearing assemblies either costly or impractical. Start-stop tests of a preferred embodiment of the invention have experienced well over 25,000 actuations before failure.

The present invention will become more apparent when understood in conjunction with the following description and drawings, wherein like characters indicate like parts and wherein the drawings form a part of the present description.

### BRIEF DESCRIPTION OF THE DRAWINGS

An embodiment of the present invention will now be described, by way of example, with reference to the accompanying drawings in which:
Figure 1 illustrates a single beam holographic scanner constructed in accordance with the present invention;
Figure 2 is a side perspective view of a preferred embodiment of the rotating beam deflector of Figure 1;
Figure 3 is a cross-sectional view taken on the line 3-3 in Figure 2; and
Figure 4 is a graphical representation of the unloading force vs. bearing gap distance as experienced by one embodiment of the bearing of Figures 2 and 3.

### DETAILED DESCRIPTION OF THE PREFERRED EMBODIMENTS

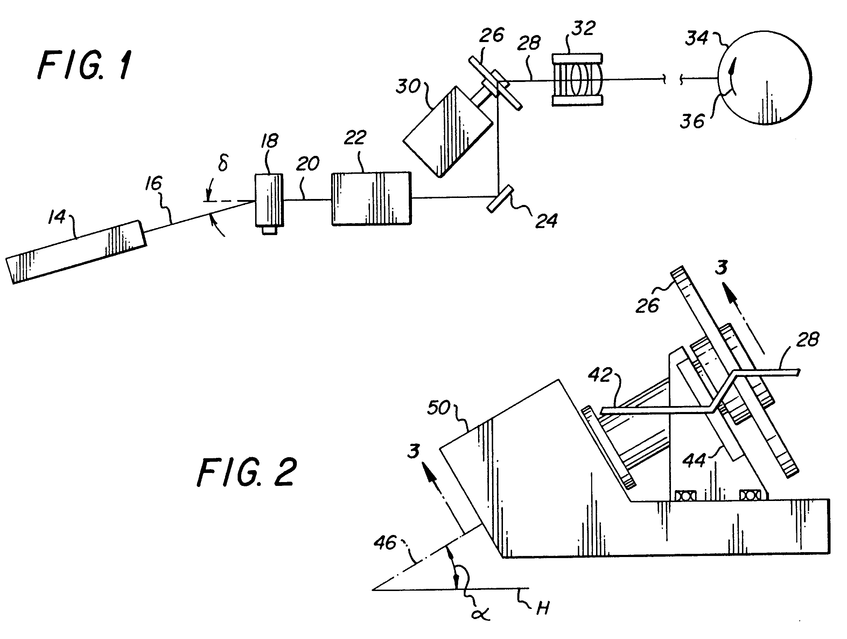

As shown in Figure 1, a beam scanning system may be constructed to include a modulated light beam source 14 such as a laser for generating a source beam 16 that enters an acousto-optical modulator 18. Input beam 20 enters beam shaping optics 22 and a mirror 24 to form beam 20 to the proper size and to direct it to a rotating hologon 26, whereupon the input beam becomes a scanning output beam 28.

The contemplated output beam 28 will scan in a nominally horizontal direction as hologon 26 is rotationally driven by a high speed motor 30. Output beam 28 then passes through beam focusing optics, such as a reflective optical element or an f-Θ lens 32 to form a single beam spot on a target represented by rotating drum 34. The image plane is therefore located at the drum surface where the scan is parallel to the axis of drum rotation.

Output 28 is deflected in a horizontal scanning (x-axis) direction on the image surface of drum 34, along a line normal to the plane of the drawing in Figure 1, while the vertical or cross scan component of the beam in the z-axis direction is achieved by rotation of drum 34 in the direction of arrow 36 to thus generate a two-dimensional raster scan.

f-Θ lens 32 is an achromat, optimized for the output beam wavelength l₁, and it also contains a field flattener to provide good focus on a flat surface. The f-Θ lens also compensates for distortion so that beam motion at the image surface is directly proportional to hologon rotation rate throughout the entire scan. Preferably, the hologon scanner is an output device such as a printer, and therefore the target would include a photosensitive medium on the drum surface. Alternatively, the contemplated hologon scanner can be modified, according to techniques known to a skilled practitioner, to be operable as an input device, such as an optical reader.

Illustrated beam source 14 is preferably a laser beam source providing at its output a single monochromatic beam. Acousto-optic modulator 18 is known in the art as a device having single or plural piezoelectric transducers with each transducer being optimized for a radio-frequency (RF) carrier frequency. Application of an RF carrier to the piezoelectric transducer creates an acoustic wave in the device which diffracts the applied laser beam approximately perpendicular to the acoustic wave propagation. As a result, the light beam is intensity modulated by modulating the power in the RF carrier frequency in a manner known in the art. Further details concerning the aforementioned acousto-optical modulator 18 and suitable component beam modulation techniques may be found in commonly-assigned U.S. Patent Re. 29,670 reissued in the name of Spaulding and commonly-assigned U.S. Patent Re. 31,334, reissued in the names of Spaulding and Pickering, the disclosures of which are included herein by reference.

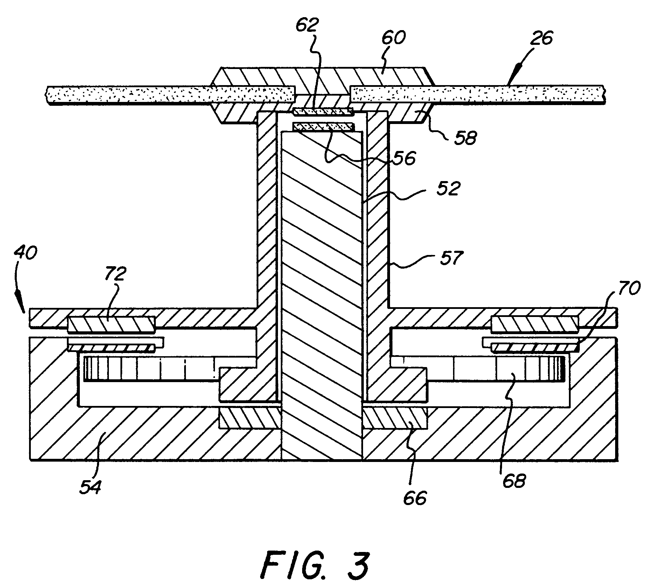

As illustrated in Figures 2 and 3, the hologon system includes a novel self-acting gas bearing 40 constructed according to the present invention for use in the laser scanning system of Figure 1. As shown in Figure 2, a stationary input light beam 42 from the light source is directed along a horizontal path through a stationary grating 44, whereupon the input beam is directed upwards to the spinning hologon disk 26. By virtue of known diffraction phenomena, rotation of the hologon disk imparts a scanning motion to the redirected light beam so as to form a scanning beam 28 having a scan direction within a horizontal scanning plane slightly displaced from the plane of stationary beam 42.

Due to the tilt of the spin axis and the arrangement of source beam 42 and the scanning beam 28, both the input beam and the scanning beam may be located within the compact profile of the system. The tilt of the spin axis thus allows the profile of the system to be minimized. The beam scanning apparatus may my be constructed with a more compact profile without resort to costly and complex beam-steering optics used in the prior art. The particular tilt of the spin axis 46 is preferably at an angle α of about 33 degrees from the horizontal (or about 60 degrees from the direction of gravitational force). Other tilt angles may be achieved, depending upon the optical characteristics that are particular to the design of the stationary grating 44 and hologon disk 26.

Referring to Figure 3, the hologon system includes a housing, a motor assembly, a self acting gas bearing, and hologon disk 26 that is mountable for rotation about axis 46. The housing supports a stator assembly including a fixed cylindrical bearing spindle 52 having a solid end face and a lower unloading magnet 56 centrally-mounted on the end face. A corresponding rotor assembly includes a cylindrical bearing sleeve 57 has mountable thereon a disk support ring 58 and a disk retention cap 60 for mechanically or adhesively fixing hologon disk 26 to the support ring 58 (thereby fixing the disk to bearing sleeve 57). In some applications, the hologon disk 26 may include a central aperture, for cooperation with the mounting cap and the supporting ring. The integral combination of the disk, the cap, the support ring, and the bearing sleeve form the rotor assembly. The bearing sleeve is rotatable about the cylindrical spindle in a manner coaxially with spin axis 46.

Fixed at the underside of support ring 58, and positioned opposite lower unloading magnet 56, is an opposed upper unloading magnet 62. The upper and lower unloading magnets are polarized to achieve a repulsive magnetic force along the spin axis within the magnet gap situated therebetween. The housing encloses the lower portion of the gas bearing assembly. That is, the base of spindle 52, bearing sleeve 57, upper and lower grooved thrust plates 64 and 66, respectively, and a combined lower balancing plane and rotating flux plate 68. The motor assembly includes a circuit board 70, attached to the housing and including motor driving coils, and motor magnets 72 attached to an upper rotating flux plate that is integral with the bearing sleeve. The rotor assembly may be rotated by the motor assembly and motor controlling and driving means (not shown for clarity) as known in the art. The preferred embodiments of the illustrated gas bearing have been successfully driven in excess of 12,000 RPM by use of a motor assembly in the form of a brushless radial field direct current (DC) motor incorporated (as shown in Figure 3) integrally with the housing.

In the preferred embodiment, bearing spindle 52 and bearing sleeve 57 have respective opposing bearing surfaces formed from 440-C stainless steel or its equivalent and may be formed as plain (grooveless) or grooved surfaces. The choice of a grooveless design constructed from steel makes for an inexpensive gas bearing that is simpler to fabricate than most prior art designs. The interfaces of the upper and lower thrust plates 64, 66 are preferably grooved in a helical or other selected pattern to achieve the requisite fluid flow when spun as known in the art. Rotation of the rotor assembly thus causes a thin gas film to be built up in the thrust plate gap. The upper thrust plate bearing surface is lifted from the lower thrust plate bearing surface, whereupon the rotor assembly achieves a steady state, full speed rotation and no longer contacts spindle 52 or any other point in the hologon system.

Hologon 26 has multiple facets bounded by radial lines. Each facet includes a diffraction grating pattern. The hologon disk may be transparent or opaque, depending on whether the holographic beam deflector is of the transmission or reflection type. The disk may be regarded as divided into a plurality of sector-shaped facets; that is, regions bounded by two radial lines extending radially from the axis of the disk and an arc concentric with the disk, the arc usually being a portion of the circular periphery of the disk. Further information on hologons may be found in *Optical Information Processing and Holography*, by W. Thomas Cathey, JOHN WILEY & SONS; and *Handbook of Optical Holography*, by H.J. Caulfield, ACADEMIC PRESS, INC.

Other aspects of the hologon system and the design of the self-acting gas bearing may be determined according to the particular application and as known in the art. Accordingly, further description of the preferred embodiment will be directed to a novel technique for unloading the rotor assembly mass that serves to significantly extend the start/stop life of the hologon system to well over 25,000 cycles.

During the development of the preferred embodiment, it was discovered that the catastrophic failures of various prototype gas bearings were attributable to several factors. One major factor appears to be the contact of the rotor assembly on the spindle and lower thrust plate during the transition from the rest state to the operating state (termed herein "lift-off") and from the operating state back to the rest state (termed herein as "touchdown"). In addition to the duration of contact that occurs with every lift-off and touchdown, there are also momentary touchdowns that are believed to occur due to certain modes of instability that are excited as the bearing passes through these transitional states. Also, external vibrations are believed to be coupled to the rotating bearing, thus disturbing its spin axis and/or inducing a momentary mode of instability. Contact of the bearing surfaces during rotation at a sufficient speed is believed to cause a metal to metal abrasion wherein the contact area suffers significant, highly localized heating and momentary welding of the contacting surfaces, which are then are presumed to break free due to the momentum of the spinning rotor assembly. Eventually, a momentary contact is believed to result in a weld which arrests the rotation of the bearing. The result is complete seizure of the bearing, rendering it useless.

A second factor is the tilt of the spin axis, which accentuates the load on the self-acting bearing and aggravates the impingement of the bearing surfaces during lift-off and touchdown rotations of the rotor assembly. Momentary touchdowns may also be more prevalent due to the tilt of the spin axis.

According to the present invention, a significant improvement in reliability and performance can be obtained by reducing the duration and severity of contact during these transitions. As will now be discussed in detail, the undesirable effects of liftoff and touchdown are greatly reduced or eliminated by virtue of a magnetically-induced unloading of the rotor assembly.

Because upper unloading magnet 62 is concentrically fixed at the underside of disk support ring 58, as the rotor assembly is fitted coaxially over bearing spindle 52, the rotor assembly is axially supported along spin axis 46 and contacts the lower portion of the bearing assembly at the interface of the upper and lower grooved thrust plates 64 and 66, respectively. Whether unloading magnets 56 and 62 are separated while the rotor assembly is at rest is determined by characteristics discussed hereinbelow, such as the size of the upper and lower unloading magnets and the magnitude of the magnetic repulsion force that is developed therebetween. However, even while the rotor assembly is at rest, the repulsion between the upper and lower unloading magnets positively acts to "unload" or relieve a predetermined proportion of the thrust load of the rotor assembly. In accordance with a key feature of the present invention, therefore, the rotor assembly is partially unweighted such that, upon actuation of the motor assembly, the upper and lower thrust plates lift-off very quickly and thereby experience a decreased amount of frictional wear. Also, the onset of lift-off occurs at a much lower speed (e.g., less than 500 RPM) than that occurring in a conventional self-acting gas bearing. Similarly, the rotor assembly remains partially unweighted such that, upon deactivation of the motor assembly, the rotor assembly experiences a decreased amount of frictional wear at touch-down than is found in the prior art.

In a further feature of the present invention, and as distinguished from a conventional magnetic thrust bearing (wherein a rotor assembly is levitated by a magnetic field), the unloading of the rotor assembly occurs principally while the rotor is at rest, and decreases as the rotor assembly lifts off, due to the increased separation of the upper and lower unloading magnets. Therefore, it is a significant feature that the rotor assembly is not completely unweighted by the upper and lower unloading magnets, so as to allow the fluid flow extant during the actuation of the self-acting gas bearing to provide the requisite bearing stiffness. When the rotating assembly achieves a full speed state of rotation, the upper and lower unloading magnets are fully separated by the action of the fluid flow between the upper and lower thrust plates. The fluid flow thereby provides all or a major proportion of the lift imposed on the rotor assembly.

A first benefit of the bearing design according to the present invention is that the required starting torque is minimized. Another benefit is that the stiffness of the self-acting gas bearing controls the location of hologon disk 26 along spin axis 46, which is preferable to (for example) a magnetic thrust bearing, which is much more susceptible to axial perturbations of the hologon that significantly degrade the scanning accuracy of the beam scanning system. Furthermore, the hologon system of the present invention benefits from locating spin axis 46 an angle with the horizontal plane H as shown in Figure 2. This canted relationship reduces the profile of the hologon system such that it is more compact than a conventional gas bearing design.

We have found that in a hologon system constructed according to the present invention, the above-described incidence of bearing failure is forestalled until well over 25,000 start/stop cycles. Accordingly, the reliable operation of the contemplated hologon system is significantly extended beyond the failure rate of prior art designs.

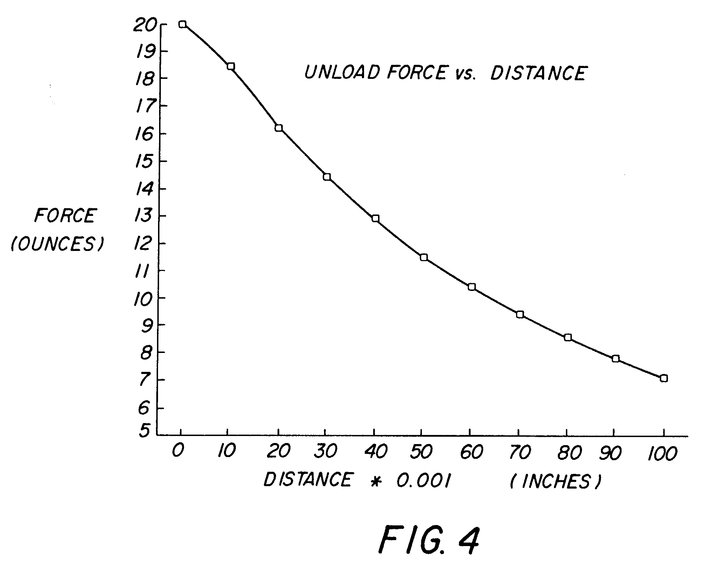

With reference now to Figure 4, a method for the determination of the desired magnetic repulsion force for unloading of the rotating mass of the rotor assembly will be understood. The upper and lower unloading magnets are preferably formed from a suitable material, such as Nd-Fe-B sintered magnetic powder, so as to have opposing poles. The magnet type, material, and size characteristics are selected generally according to principles known in the art. However, and according to the present invention, certain magnet characteristics are specifically selected so as to provide a predetermined repulsion force that will unload a predetermined proportion of the rotating mass of the rotor assembly. The unloading of the rotating mass may, for example, be controlled by selection of the size of the magnetic gap at full speed operation. One experimental working example of a preferred embodiment was constructed withthe following characteristics:

| **Parameter** | **Characteristic** |
|---|---|
| Rotor Assembly Rotational Mass | 9.7 ounces |
| Magnet Material | 27MGOe Nd-Fe-B |
| Magnet Diameter | 0.450 inches |
| Magnet Thickness | 0.063 inches |
| Surface Gauss Reading | 1500 Gauss |

As illustrated in Figure 4, the relationship of the amount of unload force with respect to the amount of magnetic gap length may be predetermined by experimental measurements. The following set of data was derived from the above-described working example and was used to produce the graph illustrated in Figure 4:

| **Magnet Gap Length (inches)** | **Unloading (Repulsive) Force (ounces)** |
|---|---|
| 0.000 | 20.0 |
| 0.010 | 18.4 |
| 0.020 | 16.2 |
| 0.030 | 14.4 |
| 0.040 | 12.9 |
| 0.050 | 11.5 |
| 0.060 | 10.4 |
| 0.070 | 9.4 |
| 0.080 | 8.6 |
| 0.090 | 7.8 |
| 0.100 | 7.1 |

By way of example, one may desire to unload a bearing having a rotating assembly mass of 9.7 oz. by 90% by provision of a repulsive force of 8.73 ounces. Figure 4 indicates that the magnet gap length at rest should be approximately 0.088 inches. This result can be achieved by varying the height of the spindle. Accordingly, it is contemplated that the height of the spindle with respect to the housing be adjustable by known means, thus allowing one to tailor the unloading of the rotor assembly according to the particular application.

The invention has been described in detail with particular reference to preferred embodiments thereof, but it will be understood that variations and modifications can be effected within the spirit and scope of the invention. For example, unloading magnets may be located at positions other than those illustrated, but within the hologon system, to achieve the desired unloading of the rotor assembly along the spin axis.

## Claims

1. An improved self-acting gas bearing having a rotor assembly having a spin axis (46), and a rotor assembly bearing surface; a stator (52, 54) assembly positioned coaxially with the rotor assembly and having a stator assembly bearing surface (66) opposed to the rotor assembly bearing surface; means (68, 70, 72) for rotatably driving the rotator assembly relative to the stator assembly; and means (40) for producing a dynamic gas pressure between said bearing surfaces during rotation of the rotor assembly, whereby the bearing surfaces are forced apart; characterized by first (62) and second (56) magnets respectively associated with said rotor assembly and said stator assembly, said first and second magnets having polarities and being positioned with respect to each other to thereby create a force opposing the gravitational force on the rotor assembly to thereby unweight the rotor assembly.

2. An improved self-acting gas bearing as defined in Claim 1 further characterized by the position of at least one of said first and second magnets being adjustable and means for adjusting the position of said at least one magnet to change the spacing between said first and second magnets, whereby the force opposing the gravitational force on the rotor assembly is changeable.

3. An improved self-acting gas bearing as defined in Claim 1 further characterized by the first and second magnets being positioned with respect to each other such that the unweighting of the rotor assembly is more prevalent while the rotor assembly is at rest than during rotation of the rotor assembly by said driving means.

4. An improved self-acting gas bearing as defined in Claim 1 further characterized by the first and second magnets being positioned with respect to each other, and the means for producing the dynamic gas pressure between the bearing surfaces is configured, such that the unweighting of the rotor assembly and the effect of the gas pressure between the bearing surfaces are inverse to each other as the speed of the rotor assembly changes.

5. An improved self-acting gas bearing as defined in Claim 1 further characterized by the spin axis being substantially angled with respect to said gravitational force.

6. An improved self-acting gas bearing having a cylindrical bearing sleeve having a spin axis, a cylindrical inner surface, and a first bearing surface fixed to the bearing sleeve; a cylindrical bearing shaft positioned coaxially within the bearing sleeve and having *(i)* a cylindrical outer surface and *(ii)* a second bearing surface fixed to the bearing shaft such that the first and second bearing surfaces are mutually opposed, one of said bearing sleeve and bearing shaft being part of a rotor assembly and the other of said bearing sleeve and bearing shaft being part of a stator assembly; means for driving the rotator assembly to establish a relative rotational velocity between the bearing sleeve and the bearing shaft; and means for producing a dynamic gas pressure between said bearing surfaces during rotation of the rotatably mounted one of said bearing sleeve and bearing shaft, whereby the bearing surfaces are forced apart; characterized by
first and second magnets respectively associated with said bearing shaft and said bearing sleeve, said first and second magnets being positioned with respect to each other and having appropriate polarities so as to create a force opposing the gravitational force on the rotatably mounted one of said bearing sleeve and bearing shaft.

7. An improved self-acting gas bearing as defined in Claim 6 further characterized by the position of at least one of said first and second magnets being adjustable; and means for adjusting the position of said at least one magnet to change the spacing between said first and second magnets, whereby the force opposing the gravitational force on the rotor assembly is changeable.

8. An improved self-acting gas bearing as defined in Claim 7 wherein the first and second magnets are positioned with respect to each other such that the unweighting of the rotor assembly is more prevalent while the rotor assembly is at rest than during rotation of the rotor assembly by said driving means.

9. An improved self-acting gas bearing as defined in Claim 7 wherein the first and second magnets are positioned with respect to each other, and the means for producing the dynamic gas pressure between the bearing surfaces is configured, such that the unweighting of the rotor assembly and the effect of the gas pressure between the bearing surfaces are inverse to each other as the speed of the rotor assembly changes.

10. An improved self-acting gas bearing as defined in Claim 7 wherein the spin axis is angled at about 60 degrees with respect to said gravitational force.
